# EUROPEAN PATENT APPLICATION

(11) **EP 2 711 393 A1**
(43) Date of publication of application: **26.03.2014**
(21) Application number: 12789699.1
(22) Date of filing: 26.04.2012
(51) Int. Cl.: C08L 27/06, C08K 3/26, C08K 5/053, C08K 5/07, C08K 5/09

(54) **VINYL CHLORIDE RESIN COMPOSITION FOR INJECTION MOLDING**

(30) Priority: 20.05.2011 JP 2011113310
(71) Applicant: Adeka Corporation, Tokyo 116-8554 (JP)
(72) Inventor: TAIRABUNE, Hiroki, Saitama-shi Saitama 336-0022 (JP); SENGOKU, Tadashi, Saitama-shi Saitama 336-0022 (JP); MIZU, Masumi, Saitama-shi Saitama 336-0022 (JP)
(74) Representative: Forstmeyer, Dietmar
(86) International application number: PCT/JP2012/061227
(87) International publication number: WO 2012/160943

(57) **Abstract**

The present invention provides a vinyl chloride resin composition for injection molding, including relative to 100 parts by mass of a vinyl chloride resin,
(a) 0.01 to 10 parts by mass of an organic acid calcium salt and/or an organic acid zinc salt,
(b) 0.01 to 10 parts by mass of a hydrotalcite compound,
(c) 0.01 to 10 parts by mass of a β-diketone compound, and
(d) 0.01 to 10 parts by mass of a polyol mixture,
wherein the polyol mixture of component (d) is a polyol mixture composed of pentaerithrytol and condensates thereof; when the degree of condensation of pentaerithritol is represented by n, the combined content of the pentaerithrytol and condensates thereof of n = 1 to 3 is 5 to 40% by mass relative to the overall amount of the polyol mixture.

## Description

### TECHNICAL FIELD

The present invention relates to vinyl chloride resin compositions for injection molding, and particularly to vinyl chloride resin compositions for injection molding which are superior in thermal stability, heat resistance, and molding processability without using stabilizers based on heavy metal, such as lead and tin, which is problematic in terms of safety or environmental protection, and injection molded articles good in appearance produced from the vinyl chloride resin composition for injection molding.

### BACKGROUND ART

Vinyl chloride resins are low in price, have superior physical properties, have characteristics such as flame retardancy, weather resistance, and chemical resistance, and can be injection molded, and thus they have been used for a wide variety of applications after being molded into various forms such as piping materials including pipes and joints, and hard building materials such as window frames.

The addition of a stabilizer is essential for suppressing the thermal decomposition, such as dehydrochlorination, in the injection molding, and stabilizers based on heavy metals such as lead, cadmium, and tin, have conventionally been used widely (see, for example, Patent Literature 1). In recent years, however, the interest in environment protection and environment conservation has been growing, therefore, the toxicity of the heavy metal or the like and negative effects on the environment have come to problems and there has been a tendency to use barium-zinc composite stabilizers. Moreover, since the influence of barium on the environment is beginning to be feared, stabilizers based on calcium-zinc, etc. have recently been proposed.

### (See, for example, Patent Literature 2.)

The heat resistance performance of these stabilizers are not satisfactory, and there was the problem that a flash (surface defect) would be formed in the appearance of a molded article due to a dehydrochlorination reaction, etc. caused by shortage in heat resistance at the time of injection molding. Moreover, one existing problem is that the incorporation of calcium-zinc-based stabilizers is inferior in surface gloss as compared with lead-based stabilizers.

### CITATION LIST

### PATENT LITERATURE

Patent Literature 1: Japanese Patent Application Laid-Open (JP-A) No. 9-241459
Patent Literature 2: JP-A No. 2004-238516

### SUMMARY OF INVENTION

### TECHNICAL PROBLEM

Thus, an object of the present invention is to provide a vinyl chloride resin composition for injection molding which is superior in thermal stability and heat resistance, does not produce defective appearance in injection molding, is superior in injection molding processability, and contains no stabilizers based on heavy metal, such as lead, tin, and barium. Another object is to provide a molded article superior in appearance obtained by injection molding the vinyl chloride resin composition for injection molding.

### SOLUTION TO PROBLEM

The present inventors researched earnestly in order to solve the above-described problems and have accomplished the present invention.

That is, the present invention provides a vinyl chloride resin composition for injection molding, containing relative to 100 parts by mass of a vinyl chloride resin,
(a) 0.01 to 10 parts by mass of an organic acid calcium salt and/or an organic acid zinc salt,
(b) 0.01 to 10 parts by mass of a hydrotalcite compound,
(c) 0.01 to 10 parts by mass of a β-diketone compound, and
(d) 0.01 to 10 parts by mass of a polyol mixture,
wherein the polyol mixture of component (d) is a polyol mixture composed of pentaerithrytol and condensates thereof; when the degree of condensation of pentaerithritol is represented by n, the combined content of the pentaerithrytol and condensates thereof of n = 1 to 3 is 5 to 40% by mass relative to the overall amount of the polyol mixture, where the combined content of the pentaerithrytol and the condensate thereof of n = 1 to 3, and condensates of pentaerithrytol of n ≥ 4 is taken as 100% by mass.

In addition, the present invention provides the vinyl chloride resin composition for injection molding, wherein the polyol mixture of component (d) is a polyol mixture composed of pentaerithrytol and condensates thereof; when the degree of condensation of pentaerithritol is represented by n, the content of pentaerithrytol of n = 1 is 0 to 10% by mass and the combined content of the pentaerithrytol and condensates thereof of n = 1 to 3 is 5 to 30% by mass relative to the overall amount of the polyol mixture.

In addition, the present invention provides a molded article produced by injection molding the vinyl chloride resin composition for injection molding.

### ADVANTAGEOUS EFFECTS OF INVENTION

According to the present invention, it is possible to provide a vinyl chloride resin composition for injection molding which is superior in thermal stability and heat resistance, does not produce defective appearance in injection molding, is superior in injection molding processability, and contains no stabilizers based on heavy metal, such as lead, tin, and barium. It is also possible to provide a molded article superior in appearance obtained by injection molding the vinyl chloride resin composition for injection molding.

### DESCRIPTION OF EMBODIMENTS

The vinyl chloride resin composition for injection molding of the present invention is described in detail below on the basis of preferable embodiments.

The vinyl chloride resin to be used for the present invention is not particularly restricted to those produced by such polymerization methods as bulk polymerization, solution polymerization, suspension polymerization, and emulsion polymerization, and examples thereof include vinyl chloride resins such as polyvinyl chloride, chlorinated polyvinyl chloride, polyvinylidene chloride, chlorinated polyethylene, vinyl chloride-vinyl acetate copolymers, vinyl chloride-ethylene copolymers, vinyl chloride-propylene copolymers, vinyl chloride-styrene copolymers, vinyl chloride-isobutylene copolymers, vinyl chloride-vinylidene chloride copolymers, vinyl chloride-styrene-maleic anhydride ternary copolymers, vinyl chloride-styrene-acrylonitrile copolymers, vinyl chloride-butadiene copolymers, vinyl chloride-isoprene copolymers, vinyl chloride-chlorinated propylene copolymers, vinyl chloride-vinylidene chloride-vinyl acetate ternary copolymers, vinyl chloride-maleic acid ester copolymers, vinyl chloride-methacrylic acid ester copolymers, vinyl chloride-acrylonitrile copolymers and copolymers of vinyl chloride with various vinyl ethers; blend products of these resins with each other; and their blend products, block copolymers, graft copolymers, etc. with other chlorine-free synthetic resins, such as acrylonitrile-styrene copolymers, acrylonitrile-butadiene-styrene copolymers, ethylene-vinyl acetate copolymers, ethylene-ethyl(meth)acrylate copolymers, and polyesters.

Next, the component (a) of the present invention is described.

In the present invention, an organic acid calcium salt and/or an organic acid zinc salt is used as the component (a).

Examples of the organic acid calcium salt include calcium salts of organic carboxylic acids, phenols, or organic phosphoric acids.
Examples of the organic acid zinc salt include zinc salts resulting from changing the calcium salts provided as examples of the organic acid calcium salt to zinc.

Examples of the abovementioned organic carboxylic acids include monobasic carboxylic acids such as acetic acid, propionic acid, butyric acid, valeric acid, caproic acid, enanthic acid, caprylic acid, pelargonic acid, 2-ethylhexanoic acid, neodecanoic acid, capric acid, undecanoic acid, lauric acid, tridecanoic acid, myristic acid, palmitic acid, isostearic acid, stearic acid, 12-hydroxystearic acid, behenic acid, montanoic acid, benzoic acid, monochlorobenzoic acid, p-tert-butylbenzoic acid, dimethylhydroxybenzoic acid, 3,5-di-tert-butyl-4-hydroxybenzoic acid, toluic acid, dimethylbenzoic acid, ethylbenzoic acid, cuminic acid, n-propylbenzoic acid, aminobenzoic acid, N,N-dimethylaminobenzoic acid, acetoxybenzoic acid, salicylic acid, p-tert-octylsalicylic acid, elaidic acid, oleic acid, linoleic acid, linolenic acid, thioglycolic acid, mercaptopropionic acid and octyl mercaptopropionic acid; dibasic carboxylic acids such as oxalic acid, malonic acid, succinic acid, glutaric acid, adipic acid, pimelic acid, suberic acid, azelaic acid, sebacic acid, phthalic acid, isophthalic acid, terephthalic acid, hydroxyphthalic acid, chlorophthalic acid, aminophthalic acid, maleic acid, fumaric acid, citraconic acid, methaconic acid, itaconic acid, aconitic acid and thiodipropionic acid; and monoesters or monoamide compounds of these dibasic carboxylic acids; and di- or tri-ester compounds of tri- or tetra-basic carboxylic acids such as butanetricarboxylic acid, butanetetracarboxylic acid, hemimellitic acid, trimellitic acid, mellophanic acid, and pyromellitic acid.

Examples of the aforementioned phenols include tert-butylphenol, nonylphenol, dinonylphenol, cyclohexylphenol, phenylphenol, octylphenol, phenol, cresol, xylenol, n-butylphenol, isoamylphenol, ethylphenol, isopropylphenol, isooctylphenol, 2-ethylhexylphenol, tert-nonylphenol, decylphenol, tert-octylphenol, isohexylphenol, octadecylphenol, diisobutylphenol, methylpropylphenol, diamylphenol, methylisohexylphenol, and methyl-tert-octylphenol.

Examples of the aforementioned organic phosphoric acids include mono- or di-octylphosphoric acid, mono- or di-dodecylphosphoric acid, mono- or di-octadecylphosphoric acid, mono- or di-(nonylphenyl)phosphoric acid, nonylphenyl phosphonate, and stearyl phosphonate.

As the above-mentioned the component (a) which is the organic acid calcium salt and/or organic zinc salt, an acidic salt, a neutral salt, a basic salt, or hyper basic complexes obtained by neutralizing a part or whole part of the base of the basic salt with carbonic acid, may also be used.

The aforementioned organic acid calcium salt and the aforementioned organic acid zinc salt each may be used alone or may be used together. As to each of the organic acid calcium salt and the organic acid zinc salt, only one species may be used or two or more species may be used in combination.

Preferred as the organic acid calcium salt and/or the organic acid zinc salt which is the above-mentioned component (a) is the organic carboxylic acid salt from the point of view of heat resistance and injection molding processability.

In the vinyl chloride resin composition for injection molding of the present invention, the content of the organic acid calcium salt and/or the organic acid zinc salt which is the above-mentioned component (a) is 0.01 to 10 parts by mass relative to 100 parts by mass of the vinyl chloride resin, and from the point of view of heat resistance and injection molding processability, the content is preferably 0.1 to 6 parts by mass, and more preferably 0.5 to 3 parts by mass. If the content of the component (a) is less than 0.01 parts by mass, almost no effect of the component will be observed, whereas if the content exceeds 10 parts by mass, the effect will no longer be enhanced and it will have a bad effect on injection molding processability.

It is preferable to use one or more kinds of organic acid calcium salt and one or more kinds of organic acid zinc salt in combination as the above-mentioned component (a), and the content of the organic acid calcium salt in this case, relative to 100 parts by mass of the vinyl chloride resin, is preferably 0.01 to 5 parts by mass, more preferably 0.05 to 3 parts by mass, and the content of the organic acid zinc salt is preferably 0.01 to 5 parts by mass, more preferably 0.05 to 3 parts by mass.

Next, the component (b) of the present invention is described.

In the present invention, a hydrotalcite compound is used as the component (b).

In the present invention, the hydrotalcite compound refers to carbonic acid double salt compound of magnesium and/or zinc with aluminum. The aforementioned hydrotalcite compound may be either a natural product or a synthetic product. Examples of the method of synthesizing the synthetic product include the conventional methods disclosed in Japanese Patent Application Publication (JP-B) Nos. 46-2280, 50-30039 and 51-29129, JP-A No. 61-174270, etc. In the present invention, the aforementioned hydrotalcite compound can be used without any limitations with respect to its crystal structure, crystal grain system, or presence or absence and the amount of crystal water.

The aforementioned hydrotalcite may be subjected to perchloric acid treatment and there can be used a product thereof with its surface coated with a higher fatty acid such as stearic acid, a higher fatty acid metal salt such as an oleic acid alkali metal salt, a metal salt of an organic sulfonic acid such as a dodecylbenzenesulfonic acid alkali metal salt, a higher fatty acid amide, a higher fatty acid ester, a wax, or the like.

Preferable as the hydrotalcite compound, which is the above-described component (b), is a compound represented by the following General Formula (1).
[Chemical Formula 1]

Mgₓ₁Znₓ₂Al₂(OH)₂₍ₓ₁₊ₓ₂)₊₄·CO₃·mH₂O (1)

wherein, x1 and x2 each represent a number satisfying the following equations and m represents a real number; 0.1 ≤ x2/x1 < 10, 2 ≤ x1 + x2 < 20.

In the vinyl chloride resin composition for injection molding of the present invention, the content of the hydrotalcite compound, which is the above-described component (b), is 0.01 to 10 parts by mass relative to 100 parts by mass of the vinyl chloride resin, and in view of heat resistance and injection molding processability, the content is preferably 0.05 to 5 parts by mass and more preferably 0.1 to 3 parts by mass. If the content of the component (b) is less than 0.01 parts by mass, almost no effect of improving heat resistance will be observed, whereas if the content exceeds 10 parts by mass, the effect will no longer be enhanced and it will have a bad influence on heat resistance, injection molding processability, etc.

Next, the component (c) of the present invention is described.

In the present invention, a β-diketone compound is used as the component (c). Useful as the β-diketone compound are dehydroacetic acid, dibenzoylmethane, distearoylmethane, acetylbenzoylmethane, palmitoylbenzoylmethane, stearoylbenzoylmethane, etc., and their metal salts (calcium salt, zinc salt, magnesium salt, etc.) are also useful. Such β-diketone compounds may be used singly or in combination.

In the vinyl chloride resin composition for injection molding of the present invention, the content of the β-diketone compound, which is the above-described component (c), is 0.01 to 10 parts by mass relative to 100 parts by mass of the vinyl chloride resin, and in view of coloring resistance and injection molding processability, the content is preferably 0.05 to 5 parts by mass and more preferably 0.1 to 3 parts by mass. If the content of the component (c) is less than 0.01 parts by mass, almost no effect of improving coloring resistance will be observed, whereas if the content exceeds 10 parts by mass, the effect will no longer be enhanced and it will have a bad influence on injection molding processability, etc.

Next, the component (d) of the present invention is described.

In the present invention, a polyol mixture is used as the component (d).

The polyol mixture is a polyol mixture composed of pentaerithrytol and condensates thereof and is characterized in that when the degree of condensation of pentaerythritol is represented by n, the combined content of pentaerythritol and condensates thereof of n = 1 to 3 is 5 to 40% by mass based on the overall amount of the polyol mixture, where the combined content of pentaerithrytol and condensates thereof of n = 1 to 3, and condensates of pentaerithrytol of n ≥ 4 is 100 % by mass.

As to the above-mentioned polyol mixture, from the point of view of heat resistance and injection molding processability, such a mixture that the combined content of pentaerithrytol and condensates thereof of n = 1 to 3 is 10 to 30% by mass relative to the overall amount of the polyol mixture is preferable where the degree of condensation of pentaerythritol is represented by n, such a mixture that the content of pentaerythritol of n = 1 is 0 to 10% by mass and the combined content of pentaerythritol and condensates thereof of n = 1 to 3 is 5 to 30% by mass is more preferable, and such a mixture that the content of pentaerythritol of n = 1 is 0 to 5% by mass and the combined content of pentaerythritol and condensates thereof of n = 1 to 3 is 10 to 30% by mass is most preferable. If the combined content of pentaerythritol and condensates thereof of n = 1 to 3 is less than 5% by mass, it is undesirable because the heat resistance of the vinyl chloride resin composition will become poor and the appearance of injection molded articles is potentially adversely affected, whereas if the combined content is more than 40% by mass, the appearance of injection molded articles is potentially adversely affected.

Example of the pentaerythritol and condensates thereof include compounds represented by General Formula (2) below. 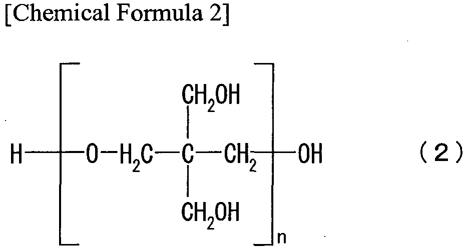 wherein, n is an integer of 1 or more.

The polyol mixture may include, for example, compounds resulting from intramolecular etherification within a single condensate of pentaerythritol shown in General Formula (2) above, compounds resulting from the intermediate methylol group(s) forming ether bond(s) with other molecule(s), compounds that have linked together into a mesh-like form, and large-size compounds formed by further linkage among molecules, forming macrocyclic ether structures in various portions.

The polyol mixture can be produced according to known methods without particular limitations. For example, the polyol mixture can be produced through thermal dehydrative condensation reaction of pentaerythritol and/or condensates of pentaerythritol as they are or in the presence of an appropriate catalyst and solvent.

Examples of the above-mentioned catalyst to be used for the production of the polyol mixture include inorganic acids and organic acids that are generally used for dehydrative condensation reaction of alcohols. Examples of inorganic acids include mineral acids such as phosphoric acid and sulfuric acid; acidic salts of such mineral acids; and solid acid catalysts such as clay minerals (e.g. montmorillonite), silica-alumina, and zeolite. Examples of organic acids include formic acid and para-toluenesulfonic acid.

There is no particular limitation to the amount of the above-mentioned catalyst to be used. In cases of using a water-soluble acid catalyst, it will suffice if the amount used can keep the pH of the reaction system during reaction below 7, and preferably equal to or below 5. In cases of using a solid acid catalyst, it will generally suffice if the amount used is 0.1 to 100% by mass with respect to pentaerythritol.

Examples of the solvent to be used for the production of the aforementioned polyol mixture include hydrocarbons such as benzene, xylene, decalin, and tetralin, ethers such as dioxane, tetrahydrofuran, ethyl ether, anisole, phenyl ether, diglyme, tetraglyme, and 18-crown-6, ketones such as methyl acetate, ethyl butylate, methyl benzoate, and γ-butyrolactone, N-substituted amides such as N-methylpyrrolidine-one, N,N-dimethylacetamide, N-methylpiperidone, and hexamethylphosphoric triamide, tertiary amines such as N,N-diethylaniline, N-methylmorpholine, pyridine, and quinoline, sulfones such as sulfolane, sulfoxides such as dimethylsulfoxide, urea derivatives such as 1,3-dimethyl-2-imidazolidinone, phosphine oxides such as tributylphosphine oxide, and silicone oil. The solvent may be either dehydrated or hydrous.

The temperature range for the thermal dehydrative condensation reaction in the production of the above-mentioned polyol mixture is generally around 100 to 280°C, and more preferably 150 to 240°C. Temperatures below 100°C may result in slow reaction, whereas temperatures above 280°C may make the condensation reaction difficult to control.

In the vinyl chloride resin composition for injection molding of the present invention, the polyol mixture, which is the component (d), is incorporated in a content, based on 100 parts by mass of vinyl chloride resin, of 0.01 parts by mass to 10 parts by mass, preferably in terms of thermal stability 0.05 to 5 parts by mass, and more preferably 0.1 to 3 parts by mass. If the content is less than 0.01 parts by mass, the addition effect is insufficient, whereas if the content is more than 10 parts by mass, it may have a bad influence on processability.

Moreover, it is preferable that the vinyl chloride resin composition for injection molding of the present invention further contains a lubricant from the viewpoint of processability.

The lubricant to be used for the present invention may be selected suitably from publicly known lubricants. Examples of the publicly known lubricants include hydrocarbon lubricants such as low molecular weight wax, paraffin wax, polyethylene wax, chlorinated hydrocarbons and fluorocarbon; natural wax lubricants such as carnauba wax and candelilla wax; fatty acid lubricants including higher fatty acids such as lauric acid, stearic acid and behenic acid, or oxy-fatty acids such as hydroxystearic acid; aliphatic amide lubricants including aliphatic amide compounds such as stearylamide, laurylamide and oleylamide, or alkylenebisaliphatic amide such as methylenebisstearylamide and ethylenebisstearylamide; fatty acid alcohol ester lubricants including fatty acid monohydric alcohol ester compounds such as stearyl stearate and butyl stearate, or fatty acid polyhydric alcohol ester compounds such as glycerin tristearate, sorbitan tristearate, pentaerythritol tetrastearate, dipentaerythritol hexastearate, polyglycerin polyricinolate and cured castor oil, or complex ester compounds of a monobasic fatty acid and a polybasic organic acid with a polyhydric alcohol such as adipic acid-stearic acid ester of dipentaerythritol; fatty alcoholic lubricants such as stearyl alcohol, lauryl alcohol and palmityl alcohol; metallic soaps; montanic acid lubricants such as partially saponified montanic acid ester; acrylic lubricants; and silicone oil. Only one kind of these lubricants may be used or two or more kinds of them may be used together.

In the event that a lubricant is used for the vinyl chloride resin composition for injection molding of the present invention, from the point of view of injection molding processability, the content thereof is preferably 0.001 to 10 parts by mass, and particularly preferably 0.05 to 5 parts by mass, based on 100 parts by mass of the vinyl chloride resin.

When the vinyl chloride resin composition for injection molding of the present invention is manufactured, the timing of blending the components (a) to (d), optionally added lubricants and other optional addition components described below with the vinyl chloride resin is not limited in particular. For example, two or more kinds selected from among the components (a) to (d), the optionally added lubricants and other optional addition components may be combined into one pack and a mixture thereof may be blended with the vinyl chloride resin. Alternatively, each component may be blended with the vinyl chloride resin in series. In the case of combining into one pack, each component may be mixed after being crushed respectively or may be crushed after being mixed.

To the vinyl chloride resin composition for injection molding of the present invention may usually be added other additives to be used for vinyl chloride resin compositions, e.g., plasticizers, zeolite compounds, metal acetyl acetonates, perchlorates, epoxy compounds, polyhydric alcohols, phosphorus-based, phenol-based, sulfur-based, and other type antioxidants, ultraviolet absorbers, hindered amine-based, and other type light stabilizers, fillers, foaming agents, flame retardants, and flame retardant auxiliary agents so long as the effect of the present invention is not impaired (preferably up to 100 parts by mass in total relative to 100 parts by mass of the vinyl chloride resin).

Examples of the aforementioned plasticizers include phthalate-based plasticizers such as dibutyl phthalate, butylhexyl phthalate, diheptyl phthalate, dioctyl phthalate, diisononyl phthalate, diisodecyl phthalate, dilauryl phthalate, dicyclohexyl phthalate and dioctyl terephthalate; adipate-based plasticizers such as dioctyl adipate, diisononyl adipate, diisodecyl adipate and di(butyldiglycol)adipate; phosphate-based plasticizers such as triphenyl phosphate, tricresyl phosphate, trixylenyl phosphate, tri(isopropylphenyl)phosphate, triethyl phosphate, tributyl phosphate, trioctyl phosphate, tri(butoxyethyl)phosphate and octyldiphenyl phosphate; polyester-based plasticizers prepared by using ethylene glycol, diethylene glycol, triethylene glycol, 1,2-propylene glycol, 1,3-propylene glycol, 1,3-butanediol, 1,4-butanediol, 1,5-hexanediol, 1,6-hexanediol, neopentyl glycol or the like as a polyhydric alcohol, and oxalic acid, malonic acid, succinic acid, glutaric acid, adipic acid, pimelic acid, suberic acid, azelaic acid, sebacic acid, phthalic acid, isophthalic acid, terephthalic acid or the like as a dibasic acid, in which polyester-based plasticizers a monohydric alcohol or a monocarboxylic acid is used as a stopper as required; tetrahydrophthalic acid-based plasticizers; azelaic acid-based plasticizers; sebacic acid-based plasticizers; stearic acid-based plasticizers; citric acid-based plasticizers; trimellitic acid-based plasticizers; pyromellitic acid-based plasticizers; biphenyl tetracarboxylic acid ester-based plasticizers; and chlorine-based plasticizers.

In the vinyl chloride resin composition for injection molding of the present invention, although the content of the plasticizer may be varied arbitrarily, the content is particularly preferably equal to or less than 10 parts by mass relative to 100 parts by mass of the vinyl chloride resin and the effect of the present invention can be exhibited by forming a rigid vinyl chloride resin thereby. It can be suitably used also for semirigid applications in which the above-mentioned plasticizer is included in a content of 50 parts by mass or less relative to 100 parts by mass of the vinyl chloride resin.

The above-described zeolite compounds are aluminosilicates of an alkali or an alkaline earth metal which have a unique three-dimensional zeolite crystal structure, and representative examples thereof include A-type, X-type, Y-type and P-type zeolites, monodenite, analcite, sodalite-family aluminosilicates, clinoptilolite, erionite and chabazite. These zeolite compounds may be either a hydrate having crystal water (so-called zeolite water) or an anhydride in which the crystal water is removed. Further, zeolites having a particle size of 0.1 to 50 µm may be used and those having a particle size of 0.5 to 10 µm are particularly preferred.

Examples of the aforementioned metal acetyl acetonates include calcium acetylacetonate, and zinc acetylacetonate.

Examples of the aforementioned perchlorates include metal perchlorates, ammonium perchlorate, and perchloric acid-treated silicates. Examples of the metals that constitute these metal salts include lithium, sodium, potassium, calcium, magnesium, strontium, barium, zinc, cadmium, lead, and aluminum. The above-described metal perchlorates may be an anhydride or a hydrate salt. Alternatively, the above-described metal perchlorates may be one which is dissolved in an alcohol-based or ester-based solvent such as butyl diglycol or butyl diglycol adipate, or may be a dehydrate thereof.

Examples of the above-described epoxy compounds include bisphenol-type and novolac-type epoxy resins, epoxidized soybean oils, epoxidized linseed oils, epoxidized tung oils, epoxidized fish oils, epoxidized beef tallow oils, epoxidized castor oils, epoxidized safflower oils, epoxidized tall oil fatty acid octyl, epoxidized linseed oil fatty acid butyl, methyl epoxystearate, butyl epoxystearate, 2-ethylhexyl epoxystearate, stearyl epoxystearate, tris(epoxypropyl)isocyanurate, 3-(2-xenoxy)-1,2-epoxypropane, epoxidized polybutadiene, bisphenol-A diglycidyl ether, vinylcyclohexene diepoxide, dicyclopentadiene diepoxide, 3,4-epoxycyclohexyl-6-methylepoxycyclohexane carboxylate, and bis(3,4-epoxycyclohexyl)adipate.

Examples of the above-described polyhydric alcohols include sorbitol, mannitol, trimethylolpropane, ditrimethylolpropane, stearic acid partial esters of pentaerythritol or dipentaerythritol, bis(dipentaerythritol)adipate, glycerin, diglycerin, and tris(2-hydroxyethyl)isocyanurate.

Examples of the aforementioned phosphorus-based antioxidants include triphenyl phosphite, tris(2,4-di-tert-butylphenyl)phosphite, tris(nonylphenyl)phosphite, tris(dinonylphenyl)phosphite, tris(mono-, di-mixed nonylphenyl)phosphite, bis(2-tert-butyl-4,6-dimethylphenyl)·ethyl phosphite, diphenyl acid phosphite, 2,2'-methylenebis(4,6-di-tert-butylphenyl)octyl phosphite, diphenyldecyl phosphite, phenyldiisodecyl phosphite, tributyl phosphite, tris(2-ethylhexyl)phosphite, tridecyl phosphite, trilauryl phosphite, dibutyl acid phosphite, dilauryl acid phosphite, trilauryl trithiophosphite, bis(neopentyl glycol).1,4-cyclohexane dimethyl diphosphite, bis(2,4-di-tert-butylphenyl)pentaerythritol diphosphite, bis(2,6-di-tert-butyl-4-methylphenyl)pentaerythritol diphosphite, distearyl pentaerythritol diphosphite, tetra(C12-15 mixed alkyl)-4,4'-isopropylidene diphenylphosphite, bis[2,2'-methylenebis(4,6-diamylphenyl)]·isopropylidene diphenylphosphite, hydrogenated-4,4'-isopropylidene diphenol polyphosphite, tetratridecyl[4,4'-butylidenebis(2-tert-butyl-5-methylphenol]diphosphite, hexakis(tridecyl)-1,1,3-tris(2'-methyl-5'-tert-butyl-4'-hydroxyphenyl)butane triphosphonite, 9,10-dihydro-9-oxa-10-phosphaphenanthrene-10-oxide, and 2-butyl-2-ethylpropanediol-2,4,6-tri-tert-butylphenol monophosphite.

Examples of the above-described phenolic antioxidants include 2,6-di-tert-butyl-p-cresol, 2,6-diphenyl-4-octadecyloxyphenol, stearyl(3,5-di-tert-butyl-4-hydroxyphenyl)-propionate, distearyl(3,5-di-tert-butyl-4-hydioxybenzyl)phosphonate, thiodiethylene glycol-bis[(3,5-di-tert-butyl-4-hydroxyphenyl)propionate], 1,6-hexamethylenebis[(3,5-di-tert-butyl-4-hydroxyphenyl)propionate], 1,6-hexamethylenebis[(3,5-di-tert-butyl-4-hydroxyphenyl)propionic acid amide], 4,4'-thiobis(6-tert-butyl-m-cresol), 2,2'-methylenebis(4-methyl-6-tert-butylphenol), 2,2'-methylenebis(4-ethyl-6-tert-butylphenol), bis[3,3-bis(4-hydroxy-3-tert-butylphenyl)butylic acid]glycol ester, 4,4'-butylidenebis(6-tert-butyl-m-cresol), 2,2'-ethylidenebis(4,6-di-tert-butylphenol), 2,2'-ethylidenebis(4-sec-butyl-6-tert-butylphenol), 1,1,3-tris(2-methyl-4-hydroxy-5-tert-butylphenyl)butane, bis[2-tert-butyl-4-methyl-6-(2-hydroxy-3-tert-butyl-5-methylbenzyl)phenyl]terephthalat e, 1,3,5-tris(2,6-dimethyl-3-hydroxy-4-tert-butylbenzyl)isocyanurate, 1,3,5-tris(3,5-di-tert-butyl-4-hydroxybenzyl)isocyanurate, 1,3,5-tris(3,5-di-tert-butyl-4-hydroxybenzyl)-2,4,6-trimethylbenzene, 1,3,5-tris[(3,5-di-tert-butyl-4-hydroxyphenyl)propionyloxyethyl]isocyanurate, tetrakis[methylene-3-(3,5-di-tert-butyl-4-hydroxyphenyl)propionate]methane, 2-tert-butyl-4-methyl-6-(2-acryloyloxy-3-tert-butyl-5-methylbenzyl)phenol, 3,9-bis[1,1-dimethyl-2-{(3-tert-butyl-4-hydroxy-5-methylphenyl)propionyloxy}ethyl]-2 ,4,8,10-tetraoxaspiro[5.5]undecane and triethylene glycol-bis[(3-tert-butyl-4-hydroxy-5-methylphenyl)propionate].

Examples of the above-described sulfur-based antioxidants include dialkyl thiodipropionates such as dilauryl, dimyristyl and distearyl thiodipropionates; and β-alkylmercaptopropionic acid esters of polyols such as pentaerythritol tetra(β-dodecylmercaptopropionate).

Examples of the aforementioned ultraviolet absorbers include 2-hydroxybenzophenones such as 2,4-dihydroxybenzophenone, 2-hydroxy-4-methoxybenzophenone, 2-hydroxy-4-octoxybenzophenone and 5,5'-methylenebis(2-hydroxy-4-methoxybenzophenone); 2-(2'-hydroxyphenyl)benzotriazoles such as 2-(2'-hydroxy-5'-methylphenyl)benzotriazole, 2-(2'-hydroxy-3',5'-di-tert-butylphenyl)benzotriazole, 2-(2'--hydroxy-3',5'-di-tert-butylphenyl)-5-chlorobenzotriazole, 2-(2'-hydroxy-3'-tert-butyl-5'-methylphenyl)-5-chlorobenzotriazole, 2-(2'-hydroxy-5'-tert-octylphenyl)benzotriazole, 2-(2'-hydroxy-3',5'-dicumylphenyl)benzotriazole and 2,2'-methylenebis(4-tert-octyl-6-benzotriazolyl)phenol; benzoates such as phenyl salicylate, resorcinol monobenzoate, 2,4-di-tert-butylphenyl-3',5'-di-tert-butyl-4'-hydroxybenzoate and hexadecyl-3,5-di-tert-butyl-4-hydroxybenzoate; substituted oxanilides such as 2-ethyl-2'-ethoxyoxanilide and 2-ethoxy-4'-dodecyloxanilide; and cyanoacrylates such as ethyl-α-cyano-β,β-diphenyl acrylate and methyl-2-cyano-3-methyl-3-(p-methoxyphenyl)acrylate.

Examples of the above-described hindered amine-based light stabilizers include 2,2,6,6-tetramethyl-4-piperidyl stearate, 1,2,2,6,6-pentamethyl-4-piperidyl stearate, 2,2,6,6-tetramethyl-4-piperidylbenzoate, N-(2,2,6,6-tetramethyl-4-piperidyl)dodecyl succinimide, 1-[(3,5-di-tert-butyl-4-hydroxyphenyl)propionyloxyethyl]-2,2,6,6-tetramethyl-4-piperid yl-(3,5-di-tert-butyl-4-hydroxyphenyl)propionate, bis(2,2,6,6-tetramethyl-4-piperidyl)sebacate, bis(1,2,2,6,6-pentamethyl-4-piperidyl)sebacate, bis(1,2,2,6,6-pentamethyl-4-piperidyl)-2-butyl-2-(3,5-di-tert-butyl-4-hydroxybenzyl)ma lonate, N,N'-bis(2,2,6,6-tetramethyl-4-piperidyl)hexamethylenediamine, tetra(2,2,6,6-tetramethyl-4-piperidyl)butane tetracarboxylate, tetra(1,2,2,6,6-pentamethyl-4-piperidyl)butane tetracarboxylate, bis(2,2,6,6-tetramethyl-4-piperidyl)·di(tridecyl)butane tetracarboxylate, bis(1,2,2,6,6-pentamethyl-4-piperidyl)·di(tridecyl)butane tetracarboxylate, 3,9-bis[1,1-dimethyl-2-{tris(2,2,6,6-tetramethyl-4-piperidyloxycarbonyloxy)butylcarbo nyloxy}ethyl]-2,4,8,10-tetraoxaspiro[5.5]undecane, 3,9-bis[1,1-dimethyl-2-{tris(1,2,2,6,6-pentamethyl-4-piperidyloxycarbonyloxy)butylcar bonyloxy}ethyl]-2,4,8,10-tetraoxaspiro[5.5]undecane, 1,5,8,12-tetrakis[4,6-bis {N-(2,2,6,6-tetramethyl-4-piperidyl)butylamino}-1,3,5-triazin-2 -yl]-1,5,8,12-tetraazadodecane, 1-(2-hydroxyethyl)-2,2,6,6-tetramethyl-4-piperidinol/dimethyl succinate condensate, 2-tert-octylamino-4,6-dichloro-s-triazine/N,N'-bis(2,2,6,6-tetramethyl-4-piperidyl)hexa methylenediamine condensate and N,N'-bis(2,2,6,6-tetramethyl-4-piperidyl)hexamethylenediamine/dibromoethane condensate.

Examples of the aforementioned fillers include calcium carbonate, silica, clay, glass beads, mica, sericite, glass flakes, asbestos, wollastonite, potassium titanate, PMF, gypsum fibers, xonotlite, MOS, phosphate fibers, glass fibers, carbon fibers, and aramid fibers.

Examples of the above-mentioned foaming agents include decomposition type organic foaming agents such as azodicarbonamide, azobisisobutyronitrile, p,p'-oxybisbenzenesulfonylhydrazide, n,n'-dinitrosopentamethylenetetramine, p-toluenesulfonylsemicarbazide, and trihydrazotriazine, and decomposed type inorganic foaming agents such as sodium bicarbonate, ammonium carbonate, ammonium bicarbonate, ammonium nitrite, azide compounds, and sodium borohydride.

Examples of the aforementioned flame retardants and flame retardant auxiliary agents include triazine ring-containing compounds, metal hydroxides, other inorganic phosphorus, halogen flame retardants, silicon flame retardants, phosphoric acid ester flame retardants, condensed phosphoric acid ester flame retardants, intumescent flame retardants, antimony oxides such as antimony trioxide, other inorganic flame retardant auxiliary agents, and organic flame retardant auxiliary agents.

Examples of the aforementioned triazine ring-containing compounds include melamine, ammeline, benzoguanamine, acetoguanamine, phthalodiguanamine, melamine cyanurate, melamine pyrophosphate, butylenediguanamine, norbornenediguanamine, methylenediguanamine, ethylenedimelamine, trimethylenedimelamine, tetramethylenedimelamine, hexamethylenedimelamine, and 1,3-hexylenedimelamine.

Examples of the aforementioned metal hydroxides include magnesium hydroxide, aluminum hydroxide, calcium hydroxide, barium hydroxide, zinc hydroxide and Kisuma 5A (magnesium hydroxide: produced by Kyowa Chemical Industry Co., Ltd).

Examples of the aforementioned phosphoric acid ester flame retardants include trimethyl phosphate, triethyl phosphate, tributyl phosphate, tributoxyethyl phosphate, trischloroethyl phosphate, trisdichloropropyl phosphate, triphenyl phosphate, tricresyl phosphate, cresyl diphenyl phosphate, trixylenyl phosphate, octyldiphenyl phosphate, xylenyldiphenyl phosphate, trisisopropylphenyl phosphate, 2-ethylhexyldiphenyl phosphate, tert-butylphenyldiphenyl phosphate, bis(tert-butylphenyl)phenyl phosphate, tris(tert-butylphenyl) phosphate, isopropylphenyldiphenyl phosphate, bis(isopropylphenyl)diphenyl phosphate and tris(isopropylphenyl) phosphate.

Examples of the aforementioned condensed phosphoric acid ester flame retardants are 1,3-phenylene bis(diphenylphosphate), 1,3-phenylene bis(dixylenylphosphate) and bisphenol A bis(diphenylphosphate). Examples of the intumescent flame retardants are ammonium salt and amine salt of polyphosphoric acid.

Examples of the aforementioned other inorganic flame retardant auxiliary agents include such inorganic compounds as titanium oxide, aluminum oxide, magnesium oxide and talc, and their surface-treated products. For example, various commercial products such as TIPAQUE R-680 (titanium oxide: produced by ISHIHARA SANGYO KABUSHIKIKAISHA, LTD.) and Kyowa MAG 150 (magnesium oxide: produced by Kyowa Chemical Industry Co., Ltd) can be used.

Further, other stabilizers may be added to the vinyl chloride resin composition for injection molding of the present invention. Examples of such stabilizers include diphenylthiourea, anilinodithiotriazine, melamine, benzoic acid, cinnamic acid, p-tert-butylbenzoic acid, zeolite, and perchlorates.

In addition, in the vinyl chloride resin composition for injection molding of the present invention may be blended as required additives commonly used for vinyl chloride resins, such as crosslinking agents, antistatic agents, anti-clouding agents, anti-plating-out agents, surface treatment agents, fluorescent agents, antifungal agents, sterilizers, metal inactivators, mold release agents, processing aids, bluing agents, pigments, and dyes.

The vinyl chloride resin composition for injection molding of the present invention can be used, in the form of an injection molded article, as piping materials such as pipes, joints, and piping parts; construction materials and structural materials such as wallplates, flooring materials, window frames, corrugated sheets, and rain gutters; automotive interior and exterior materials; covering materials for electric wires; agricultural materials; food packaging materials; and sundries such as packings, gaskets, hoses, sheets, and toys, and in particular, since molded articles superior in thermal stability and heat resistance and superior in appearance can be obtained therefrom, it can be used suitably for construction material applications and structural material applications.

### EXAMPLES

Hereafter, the present invention will be explained further in detail using examples and comparative examples. However, the present invention should not be limited by these descriptions.

### [Examples 1 to 4 and Comparative Examples 1 to 4]

### <Preparation of compound for test>

The blend given in the following Table 1 was stirred at 2000 rpm by using a 10-liter Henschel mixer and its temperature was raised to 120°C. After arriving at 120°C, it was cooled at 1000 rpm to 50°C, affording a compound for an injection molding test.

### <Preparation and evaluating test (appearance, gloss) of injection molded article for test>

A resulting compound was injection molded under the following conditions by using an injection molding machine EC60NII manufactured by Toshiba Machine Co., Ltd., affording a cup-shaped molded article.

Injection molding conditions:
Barrel temperature: 170 to 200°C
Injection pressure: 90 to 95 MPa
Mold temperature: 40°C

The appearance of the resulting molded article was examined visually. In the evaluation of appearance, the case that there was a flash (surface defect) was rated as ×, and the case that there was no flash was rated as ○. Results are shown in Table 1. The gloss of the surface of a molded article (measurement angle: 60°) was measured by using a glossimeter (VG-2000) manufactured by Nippon Denshoku Industries Co., Ltd. Results are shown in Table 1.

### <Preparation of sheet for test and static thermal stability test>

Materials to be compounded given in Table 1 were blended with a rocking mixer and then roll-kneaded under the conditions of 190°C × 30 rpm × 0.6 mm × 3 minutes. Thus, a sheet for a test was prepared. The sheets obtained were put in gear ovens of 190°C and 200°C and then their blackening times (minute) were measured as <static thermal stability test>. Results are shown in Table 1.

### <Hydrogen chloride supplementability test (Congo Red Test)>

Using the sheet obtained above, a Congo Red test was conducted at 190°C in accordance with JIS K6723 and the hydrogen chloride release time due to the thermal decomposition of the vinyl chloride resin in the sheet was measured. Results are shown in Table 1.

**[Table 1]**

| | | | Examples | | | | Comparative Examples | | | |
|---|---|---|---|---|---|---|---|---|---|---|
| | | | 1 | 2 | 3 | 4 | 1 | 2 | 3 | 4 |
| Vinyl chloride resin ^{*1} | | | 100 | 100 | 100 | 100 | 100 | 100 | 100 | 100 |
| Acrylic processing aid ^{*2} | | | 1.0 | 1.0 | 1.0 | 1.0 | 1.0 | 1.0 | 1.0 | 1.0 |
| Ester-based lubricant ^{*3} | | | 0.3 | 0.3 | 0.3 | 0.3 | 0.3 | 0.3 | 0.3 | 0.3 |
| Phenolic antioxidant ^{*4} | | | 0.23 | 0.23 | 0.10 | 0.10 | 0.23 | 0.23 | 0.10 | 0.10 |
| Pigment *5 | | | 0.50 | 0.50 | 0.50 | 0.50 | 0.50 | 0.50 | 0.50 | 0.50 |
| Component (a) | Calcium stearate | | 0.58 | 0.58 | 0.50 | 0.50 | 0.58 | 0.58 | 0.50 | 0.50 |
| | Zinc stearate | | 1.22 | 1.22 | | | 1.22 | 1.22 | | |
| | Zinc laurate | | | | 0.70 | 0.70 | | | 0.70 | 0.70 |
| Component (b) | Hydrotalcite ^{*6} | | 0.50 | 0.50 | 0.50 | 0.50 | 0.50 | 0.50 | 0.50 | 0.50 |
| Component (c) | Dibenzoylmethane | | 0.20 | 0.20 | | | 0.20 | 0.20 | | |
| | Stearoylbenzoylmethane | | | | 0.20 | 0.20 | | | 0.20 | 0.20 |
| Component (d) | Polyol mixture ^{*7} | | 0.80 | 0.50 | 0.80 | 0.50 | | | | |
| Dipentaerythritol | | | | | | | 0.80 | 0.50 | 0.80 | 0.50 |
| Static thermal stability (blackening time: minute) | | 190°C | 120 | 105 | 120 | 105 | 105 | 90 | 105 | 90 |
| | | 200°C | 60 | 60 | 60 | 60 | 60 | 45 | 60 | 45 |
| Congo Red test at 190°C (minute) | | | 67 | 60 | 66 | 61 | 56 | 52 | 57 | 53 |
| Appearance | | | ○ | ○ | ○ | ○ | × | × | × | × |
| Gloss (60°) | | | 50 | 45 | 65 | 60 | 33 | 28 | 55 | 50 |

| | | | | | | | | | | |
|---|---|---|---|---|---|---|---|---|---|---|
| (Formulation is represented by part(s) by mass.) *1: TK-800 (product of Shin-Etsu Chemical Co., Ltd.; average degree of polymerization: 800) *2: Acrylic polymer processing aid (product of Mitsubishi Rayon Co., Ltd.; P-551A) *3: Ester-based lubricant (product of Emery Oleochemicals Japan; LOXIOL G-15) *4: Tetrakis [3-(3,5-di-tert-butyl-4-hydroxyphenyl)propyonyloxymethyl]methane (product of ADEKA CORPORATION; ADK STAB AO-60) *5: Titanium dioxide (product of Ishihara Sangyo Kaisha, Ltd.; TIPAQUE CR-90) *6: Hydrotalcite (compositional formula: Mg_{4.2}Al₂(OH)₁₃(CO₃)·3H₂O) (product of Kyowa Chemical Industry Co., Ltd.; Magceler-1) *7: Polyol mixture containing 4.4% by mass of n = 1, 5.1% by mass of n= 2, 2.6% by mass of n = 3, and 87.9% by mass of n ≥ 4 where the degree of condensation of pentaerythritol is represented by n. | | | | | | | | | | |

The results given above clearly show that when dipentaerythritol was used (Comparative Examples 2 and 4) as pentaerythritol or a condensate thereof, thermal stability, heat resistance, appearance (presence or absence of flash), and gloss were all insufficient. On the other hand, when the loading of dipentaerythritol was increased (Comparative Examples 1 and 3), some improvement was found in thermal stability, heat resistance, and gloss, but appearance (presence or absence of flash) was not improved at all.

Conversely, it was confirmed that when a polyol mixture, which is the component (d), was used as pentaerythritol or a condensate thereof (Examples 1 to 4), thermal stability, heat resistance, appearance (presence or absence of flash), and gloss were all excellent.

## Claims

1. A vinyl chloride resin composition for injection molding, comprising relative to 100 parts by mass of a vinyl chloride resin,
(a) 0.01 to 10 parts by mass of an organic acid calcium salt and/or an organic acid zinc salt,
(b) 0.01 to 10 parts by mass of a hydrotalcite compound,
(c) 0.01 to 10 parts by mass of a β-diketone compound, and
(d) 0.01 to 10 parts by mass of a polyol mixture,
wherein the polyol mixture of component (d) is a polyol mixture composed of pentaerithrytol and condensates thereof; when the degree of condensation of pentaerithritol is represented by n, the combined content of the pentaerithrytol and condensates thereof of n = 1 to 3 is 5 to 40% by mass relative to the overall amount of the polyol mixture, where the combined content of the pentaerithrytol and the condensate thereof of n = 1 to 3, and condensates of pentaerithrytol of n ≥ 4 is taken as 100% by mass.

2. The vinyl chloride resin composition for injection molding according to claim 1, wherein the polyol mixture of component (d) is a polyol mixture composed of pentaerithrytol and condensates thereof; when the degree of condensation of pentaerithritol is represented by n, the content of pentaerithrytol of n = 1 is 0 to 10% by mass and the combined content of the pentaerithrytol and condensates thereof of n = 1 to 3 is 5 to 30% by mass relative to the overall amount of the polyol mixture.

3. A molded article produced by injection molding the vinyl chloride resin composition for injection molding according to claim 1 or 2.
